(19) **Europäisches Patentamt / European Patent Office / Office européen des brevets**

(11) **EP 2 133 944 A1**

(12) **EUROPEAN PATENT APPLICATION**
published in accordance with Art. 153(4) EPC

(43) Date of publication:
**16.12.2009 Bulletin 2009/51**

(51) Int Cl.:
*H01M 4/90* (2006.01)    *B01J 23/52* (2006.01)
*H01M 4/88* (2006.01)    *H01M 8/10* (2006.01)
*H01M 8/12* (2006.01)

(21) Application number: **08739034.0**

(22) Date of filing: **27.03.2008**

(86) International application number:
**PCT/JP2008/055905**

(87) International publication number:
**WO 2008/123364 (16.10.2008 Gazette 2008/42)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **28.03.2007 JP 2007083908**

(71) Applicant: **Sumitomo Chemical Company, Limited Tokyo 104-8260 (JP)**

(72) Inventors:
• **HIBINO, Takashi**
  **Seto-shi**
  **Aichi 489-0918 (JP)**
• **NAGAO, Masahiro**
  **Nagoya-shi**
  **Aichi 464-0815 (JP)**

• **NAMEKATA, Yousuke**
  **Minamiuonuma-shi**
  **Niigata 949-7302 (JP)**
• **IWASAKI, Katsuhiko**
  **Tsukuba-shi**
  **Ibaraki 305-0003 (JP)**
• **TANAKA, Toshihiko**
  **Inashiki-gun**
  **Ibaraki 300-0331 (JP)**

(74) Representative: **Hart-Davis, Jason et al**
  **Cabinet Beau de Loménie,**
  **158, rue de l'Université**
  **75340 Paris Cedex 07 (FR)**

(54) **ELECTRODE CATALYST COMPOSITION, METHOD FOR PRODUCTION THEREOF, ELECTRODE, AND FUEL CELL AND MEMBRANE-ELECTRODE ASSEMBLY EACH COMPRISING THE ELECTRODE**

(57)    It is an object of the present invention to provide an electrode catalyst composition capable of forming an electrode to enhance the power generation efficiency in a fuel cell, in particular a single-chamber solid electrolyte fuel cell. The electrode catalyst composition of the present invention comprises gold and platinum, wherein the number of gold atoms is exceeding 0 and not more than 3 when the number of platinum atoms is 100.

*Fig.3*

EP 2 133 944 A1

## Description

## Technical Field

The present invention relates to an electrode catalyst composition, a method of producing the same, an electrode, and a fuel cell and a membrane-electrode assembly each comprising the electrode.

## Background Art

Electrode catalyst compositions are used as electrodes for fuel cells. Fuel cells have been attracting attention in recent years as energy conversion devices that has high energy conversion efficiency and also emit clean gasses. Solid electrolyte fuel cells are the representative fuel cells, and such a fuel cell can include two-chamber solid electrolyte fuel cells and single-chamber solid electrolyte fuel cells.

Two-chamber solid electrolyte fuel cells usually have a configuration in which a solid electrolyte (in the form of a membrane or a plate) is used as a partition wall, a fuel gas (hydrogen, alcohol, hydrocarbon, or the like) makes contact with an electrode (anode) disposed on one side of the partition wall, and an oxidizing gas (oxygen, air, or the like) makes contact with an electrode (cathode) disposed on the other side (for example, refer to Patent Document 1), and such a configuration makes it possible to obtain a potential difference between both electrodes.

Single-chamber solid electrolyte fuel cells have a configuration in which two electrodes are disposed on a solid electrolyte (in the form of a membrane or a plate), a fuel gas and an oxidizing gas are not partitioned, and a mixed gas of a fuel gas and an oxidizing gas makes contact with the two electrodes (for example, refer to Patent Document 2, Non-Patent Documents 1 and 2). Since such a configuration is simpler than the configuration of the two-chamber solid electrolyte fuel cells described above, it has an advantage in view of costs. In such a single-chamber solid electrolyte fuel cell, each of the two electrodes, i.e. a cathode and an anode, are required to have reaction selectivity during the contact of the mixed gas. That is, the anode and the cathode are required to preferentially proceed with an oxidation reaction and a reduction reaction, respectively, and as a result, a potential difference comes to be generated between both electrodes.

[Patent Document 1] JP 10-294117 A
[Patent Document 2] JP 2002-280015 A
[Non-Patent Document 1] Priestnall, Kozdeba, Fish, Nilson, Journal of Power Source, vol. 106 (2002), pages 21 - 30
[Non-Patent Document 2] Dyer, Nature, vol. 343 (1990), pages 547 - 548

## Disclosure of the Invention

Problem to be solved by the Invention

However, there have been cases where the single-chamber solid electrolyte fuel cells described above is not sufficient in the power generation efficiency.

An object of the present invention is therefore to provide an electrode catalyst composition capable of forming an electrode to enhance the power generation efficiency in a fuel cell, in particular a single-chamber solid electrolyte fuel cell. In addition, an object of the present invention is to provide a method of producing such an electrode catalyst composition, an electrode using the electrode catalyst composition, and a fuel cell and a membrane-electrode assembly each comprising the electrode.

## Means for solving the Problem

As a result of keen examinations, the present inventors have come to complete the present invention. That is, the present invention provides the inventions below.

(1) An electrode catalyst composition, comprising gold and platinum, wherein the number of gold atoms is exceeding 0 and not more than 3 when the number of platinum atoms is 100.

(2) The electrode catalyst composition of (1), wherein the number of gold atoms is not less than 0.15 and not more than 0.25 when the number of platinum atoms is 100.

(3) The electrode catalyst composition of (1) or (2), wherein the platinum is modified with the gold.

(4) The electrode catalyst composition of any of (1) to (3), wherein the composition further includes a carbon material.

(5) The electrode catalyst composition of any of (1) to (4), wherein the number of gold atoms modifying the platinum is exceeding 0 and not more than 0.15 when the number of platinum atoms is 100.

(6) The electrode catalyst composition of any of (1) to (5), wherein the gold is obtained by precipitation by a reduction reaction.

(7) An electrode, comprising the electrode catalyst composition of any of (1) to (6).

(8) A fuel cell, comprising the electrode of (7).

(9) A solid electrolyte fuel cell, comprising the electrode of (7).

(10) A single-chamber solid electrolyte fuel cell, comprising the electrode of (7).

(11) A single-chamber solid electrolyte fuel cell, comprising the electrode (7) as an anode.

(12) A membrane-electrode assembly, comprising a solid electrolyte membrane; and the electrode (7) being attached to the solid electrolyte membrane.

(13) A method of producing the electrode catalyst composition of any of (1) to (6), comprising a step of modifying the platinum by gold precipitation by a reduction reaction.

## Effect of the Invention

According to the present invention, it becomes possible to provide an electrode catalyst composition capable of forming an electrode to enhance the power generation efficiency in a fuel cell, in particular a single-chamber solid electrolyte fuel cell. Specifically, for example, it is possible to provide an anode capable of inhibiting combustion reactions with oxygen even in the coexistence of a fuel gas and an oxidizing gas, and the electrode catalyst compositions of the present invention are industrially extremely useful. Moreover, according to the present invention, it is possible to provide an electrode using the electrode catalyst compositions of the present invention described above, and a fuel cell and a membrane-electrode assembly, each comprising the electrode and having high power generation efficiency.

## Brief Description of Drawings

Fig. 1 is a schematic view showing a cross-sectional configuration of a two-chamber solid electrolyte fuel cell.
Fig. 2 is a schematic view showing a cross-sectional configuration of a single-chamber solid electrolyte fuel cell.
Fig. 3 is a graph showing relationship, in an anode of each sample, of an oxygen consumption rate (%) obtained by the sample relative to the number of gold atoms.
Fig. 4 is a schematic view showing a configuration of a fuel cell in the case of stacking three layers of a membrane-electrode assembly 4.
Fig. 5 is a diagram showing a laminated condition of the membrane-electrode assembly 4 in Fig. 4.
Fig. 6 is a graph showing power generation characteristics (current-voltage characteristics) obtained in each case of laminating one to four layers of the membrane-electrode assembly 4.

## Description of the Reference Symbols

1: anode, 2: solid electrolyte, 3: cathode, 4: membrane-electrode assembly, 5: conductive wire, and 6: carbon paper.

## Best Modes for Carrying Out the Invention

Preferred embodiments of the present invention will be described in detail below.
An electrode catalyst composition of the present embodiment includes gold and platinum, wherein the number of gold atoms, when the number of platinum atoms is 100, is exceeding 0 and not more than 3. In this electrode catalyst composition including gold and platinum, the number of gold atoms, when the number of platinum atoms is 100, is preferably exceeding 0 and not more than 2, more preferably exceeding 0 and not more than 1, even more preferably not less than 0.15 and not more than 0.25, and particularly preferably not less than 0.20 and not more than 0.25. It should be noted that "exceeding 0" means the case where the number of gold atoms is not 0 at least, but the gold atoms are included even slightly, and from the perspective of obtaining the effect of the present invention better, the number of gold atoms is preferably not less than 0.001.
Moreover, in such an electrode catalyst composition, the platinum is preferably modified with the gold at least partially. Since the electrode catalyst composition has the configuration described above, the power generation efficiency can be enhanced more when an electrode having the composition is used for a fuel cell.
The electrode catalyst composition of the present embodiment may also further include accessory components other than gold and platinum within the scope not impairing the effects thereof. Such accessory components may include, for example, conductive materials, ion-conducting materials, gas permeable materials, fillers, binders, binding agents, and the like.
Such a conductive material is useful in using the electrode catalyst composition as an electrode. The conductive material may be appropriately selected from known materials for use. For example, it can include carbon materials (graphite, acetylene black, carbon nanotube, fullerene, and the like).
The mixing of the platinum/gold and the conductive material in the electrode catalyst composition may be in accordance with known techniques. For example, a method of using a material in which platinum is supported by a carbon material, which is a conductive material, and precipitating gold on this material is preferably used. The method of such precipitation includes a method of mixing simply and physically, a method of precipitating electrochemically, a method of precipitating chemically, and the like. In view of obtaining the effects easily, a method of precipitating chemically is preferably used in which gold is precipitated by a reduction reaction.
More specifically, a method of immersing the material described above in a solution of a compound containing gold ions for a chemical reduction is included. For example, reduction may be carried out by using $HAuCl_4$ as such a compound containing gold ions and adding $NaBH_4$ in an aqueous solution thereof. Moreover, as a further reduction process, it is preferred to be heated in a hydrogen stream. The number of gold atoms when the number of platinum atoms is 100 can be controlled by the amount of $HAuCl_4$, the amount of platinum, or the like in this procedure. By carrying out the reduction process sufficiently, the gold ions as a raw material can be contained in the electrode catalyst composition as gold.

It should be noted that, when a conductive material is not contained in the electrode catalyst composition, the same method as the above may be carried out by using platinum only instead of the material in which platinum is supported by a carbon material.

A method of producing an electrode catalyst composition of the present embodiment preferably has a step of modifying the platinum with gold precipitation by a reduction reaction, as described above. In addition, the method may also have a step of modifying the platinum with gold precipitation by a reduction reaction in the presence of a conductive material (a carbon material), as described above.

In such an electrode catalyst composition, the number of gold atoms modifying the platinum, when the number of platinum atoms is 100, among the gold contained in the composition is preferably exceeding 0 and not more than 0.15, more preferably exceeding 0 and not more than 0.1, even more preferably exceeding 0 and not more than 0.05, and particularly preferably not less than 0.001 and not more than 0.05.

It should be noted that, in a case of including such a conductive material, the amount of platinum relative to (platinum + conductive material) is not particularly limited, and it is preferably from 5 to 90 weight%, more preferably from 10 to 80 weight%, and even more preferably from 20 to 70 weight%. The number of gold atoms relative to platinum can be measured by appropriately combining known analysis methods, such as the ICP emission spectrometry.

The electrode catalyst composition of the present embodiment may also include an electrolyte. Such an electrolyte is appropriately selected from known materials, and may include, for example, a fluorine-based polymer electrolyte, a hydrocarbon-based polymer electrolyte, phosphoric acid, monoester phosphate, diester phosphate, sulfuric acid, methanesulfonic acid, trifluoromethanesulfonic acid, and the like. In addition, the electrode catalyst composition may also include nonelectrolyte polymers. Such a polymer is appropriately selected from known materials, and fluororesins, such as Teflon (registered trademark) and polyvinylidene fluoride, are preferably used.

An electrode of a preferred embodiment is constructed by the electrode catalyst composition described above. The electrode of the present embodiment is useful for fuel cells, and is, above all, useful for solid electrolyte fuel cells, particularly for single-chamber solid electrolyte fuel cells.

In using the electrode of the present embodiment as an electrode of a single-chamber solid electrolyte fuel cell, it is particularly preferred to be used as an anode. In addition, in using the electrode as an electrode of a two-chamber solid electrolyte fuel cell, it can be used preferably as either of an anode or a cathode.

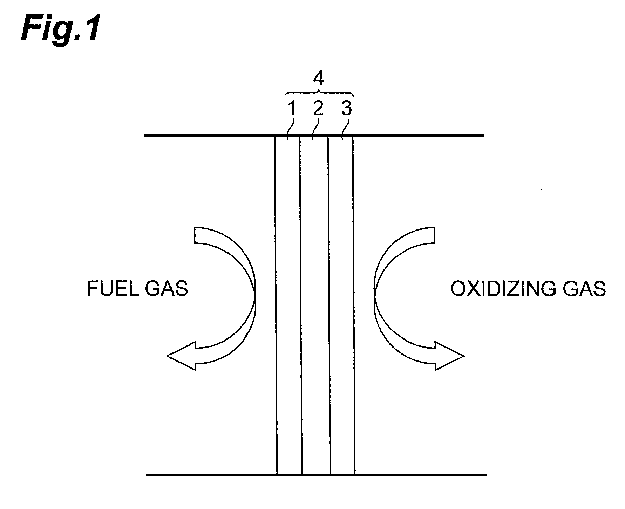

Fig. 1 is a schematic view showing a cross-sectional configuration of a two-chamber solid electrolyte fuel cell. The two-chamber solid electrolyte fuel cell shown in Fig. 1 has a solid electrolyte 2 inside a predetermined chamber as a partition wall, and an anode 1 is disposed on one side of this solid electrolyte 2 and a cathode 3 on the other side to form a membrane-electrode assembly 4. In this two-chamber solid electrolyte fuel cell, a fuel gas and an oxidizing gas are fed to the cathode 1 side and the anode 3 side, respectively.

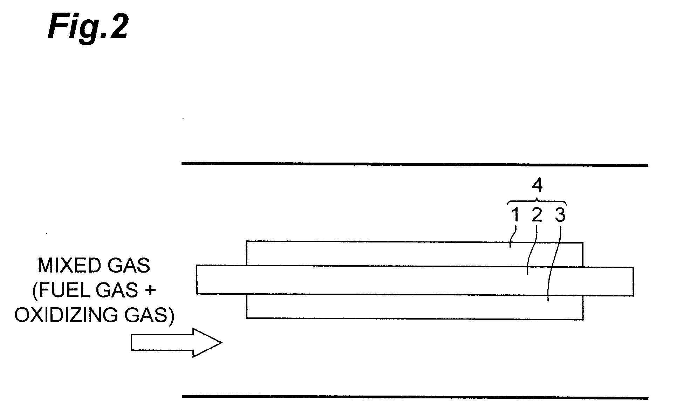

In contrast, Fig. 2 is a schematic view showing a cross-sectional configuration of a single-chamber solid electrolyte fuel cell. The single-chamber solid electrolyte fuel cell shown in Fig. 2, different from the two-chamber solid electrolyte fuel cell described above, has a solid electrolyte 2 disposed so as not to partition the inside of a predetermined chamber, and an anode 1 and a cathode 3 are disposed on one side of this solid electrolyte 2 and on the other side, respectively, to form a membrane-electrode assembly 4. In this single-chamber solid electrolyte fuel cell, a mixed gas of a fuel gas and an oxidizing gas is introduced inside the chamber.

In fuel cells having the configuration described above, major components are an anode 1, a cathode 3, an electrolyte 2, a fuel gas (hydrogen, methanol, methane, or the like), and an oxidizing gas (oxygen, air, or the like). When such a fuel cell is a single-chamber solid electrolyte fuel cell, a mixed gas of a fuel gas and an oxidizing gas is used instead of the fuel gas and the oxidizing gas. It should be noted that the configuration of such a fuel cell is not particularly limited, and may be in accordance with known techniques. Moreover, in fuel cells, each of the fuel gas, the oxidizing gas, and the mixed gas may also be humidified.

The combination of the fuel gas/oxidizing gas can include hydrogen/oxygen, hydrogen/air, methanol/oxygen, methanol/air, and the like. Above all, hydrogen/oxygen and hydrogen/air are preferred from the perspective of more enhancing the electromotive force.

Solid electrolytes are the representative electrolyte, and the materials may be selected in accordance with known techniques. More specific examples of such a solid electrolyte material can include inorganic materials such as stabilized zirconia and metal phosphate, organic materials such as polymers (fluorine-based, hydrocarbon-based), materials in which phosphoric acid is immobilized on a solid body (for example, phosphoric acid + a porous body, phosphoric acid + a polymer), and the like. From the perspectives of the operating temperature and long-term stability of fuel cells, metal phosphate is preferred. In addition, such a solid electrolyte is often in the form of a membrane or a plate. Like the configuration of the fuel cell described above, a membrane-electrode assembly of a preferred embodiment is one in which the above electrode made of the electrode catalyst composition is attached to such a solid electrolyte membrane.

As the cathode, a known material may be used. The electrode preferably includes a catalyst and a conductive material. As the catalyst for such a cathode, known materials may be used. For example, they can include various oxides ($Mn_2O_3$, $ZrO_2$, $SnO_2$, and $In_2O_3$)

and platinum. The conductive material may be appropriately selected from known materials for use. For example, they can include carbon materials (graphite, acetylene black, carbon nanotube, fullerene, and the like) and metal materials (platinum and the like). Above all, carbon materials are preferred in view of costs. The mixing of the catalyst and the conductive material may be in accordance with known techniques as described above.

**Examples**

The present invention will be described in further detail by way of Examples below, but the present invention is not limited to these

Examples.

[Test Example 1]

<Fabrication of Cathode Catalyst Composition and Cathode ($Mn_2O_3$)>

In a solvent obtained by mixing ethanol (50 ml) and distilled water (50 ml), particulate carbon (black pearl) powder (0.4 g) was mixed and stirred, and further manganese nitrate hexahydrate (3.13 g) was mixed. The obtained mixture was evaporated to dryness at 230°C, the resulting powder was pulverized. To 60 mg of this pulverized powder, several drops of a 5% polyvinylidene fluoride solution that was dissolved in N-methylpyrrolidone were added, and the slurry obtained by mixing them was applied on carbon paper (1cm x 2 cm) and was dried for one hour at 90°C and subsequently for one hour at 130°C to fabricate a cathode. On the carbon paper, a cathode of 15 to 17 mg/cm$^2$ having a thickness of approximately 150 to 200 $\mu$m was formed.

[Test Example 2]

<Fabrication of Solid Electrolyte (Pellets of Tin Phosphate)>

As a solid electrolyte, round pellets of $Sn_{0.9}In_{0.1}P_2O_7$ (a diameter of 12 mm, a thickness of 1 mm) were used. In addition, these pellets were produced using the same method as that described in Electrochemical and Solid State Letters, vol. 9, third issue, A105 - A109 pgs. (2006).

[Test Example 3]

<Fabrication of Anode Catalyst Composition and Anode (Platinum)>

To 60 mg of platinum-supported carbon (produced by Tanaka Kikinzoku, a platinum amount of 28.4 weight %), several drops of a 5% polyvinylidene fluoride solution that was dissolved in N-methylpyrrolidone were added, the slurry obtained by mixing them was applied on carbon paper, and was dried for one hour at 90°C and subsequently for one hour at 130°C to yield an anode.

[Test Example 4]

<Fabrication of Anode Catalyst Composition and Anode (Platinum + 0.15 mol% of Gold)>

Platinum-supporting carbon (produced by Tanaka Kikinzoku, a platinum amount of 28.4 weight %), $HAuCl_4$ tetrahydrate, $NaBH_4$, and ion exchange water were used. That is, first, into a dispersion in which 150 mg of a platinum-supporting carbon was dispersed in water, 0.0001 mol/L of an aqueous $HAuCl_4$ tetrahydrate solution (3.3 ml) and 0.002 mol/L of an aqueous $NaBH_4$ solution (30 ml) were dropped to obtain a mixture adjusted in such a way that the number of gold atoms became 0.15 relative to 100 platinum atoms. After filtering this mixture, the mixture was heated in a 10 volume% hydrogen / 90 volume% argon gas for one hour at 200°C to yield an electrode catalyst composition.
To the resulting electrode catalyst composition (60 mg), several drops of a 5% polyvinylidene fluoride solution that was dissolved in N-methylpyrrolidone were added, the slurry obtained by mixing them was applied on carbon paper, and was dried for one hour at 90°C and subsequently for one hour at 130°C to yield an anode. On the carbon paper, an anode of 15 to 17 mg/cm$^2$ having a thickness of approximately 150 to 200 $\mu$m was formed.
Here, the number of gold atoms modifying the platinum is estimated by calculation as being exceeding 0 and not more than 0.1 in terms of the number of gold atoms when the number of platinum atoms is 100, on the basis of the sizes of the carbon and the platinum in the platinum-supporting carbon, the amount of the platinum, and the amount of the gold in the dropped aqueous $HAuCl_4$ tetrahydrate solution.

[Test Example 5]

<Fabrication of Anode Catalyst Composition and Anode (Platinum + 0.10 mol% of Gold)>

In the same manner as Test Example 4 other than changing the number of gold atoms into 0.10 relative to 100 platinum atoms, an anode was obtained. In this case, the number of gold atoms modifying the platinum is estimated by calculation as being exceeding 0 and not more than 0.1 in terms of the number of gold atoms when the number of platinum atoms is 100.

[Test Example 6]

<Fabrication of Anode Catalyst Composition and Anode (Platinum + 0.20 mol% of Gold)>

In the same manner as Test Example 4 other than changing the number of gold atoms into 0.20 relative to 100 platinum atoms, an anode was obtained. In this case, the number of gold atoms modifying the platinum is estimated by calculation as being exceeding 0 and not more than 0.1 in terms of the number of gold atoms when the number of platinum atoms is 100.

[Test Example 7]

<Fabrication of Anode Catalyst Composition and Anode (Platinum + 0.25 mol% of Gold)>

In the same manner as Test Example 4 other than changing the number of gold atoms into 0.25 relative to 100 platinum atoms, an anode was obtained. In this case, the number of gold atoms modifying the platinum is estimated by calculation as being exceeding 0 and not more than 0.13 in terms of the number of gold atoms when the number of platinum atoms is 100.

[Test Example 8]

<Fabrication of Anode Catalyst Composition and Anode (Platinum + 0.50 mol% of Gold)>

In the same manner as Test Example 4 other than changing the number of gold atoms into 0.50 relative to 100 platinum atoms, an anode was obtained. In this case, the number of gold atoms modifying the platinum is estimated by calculation as being exceeding 0 and not more than 0.25 in terms of the number of gold atoms when the number of platinum atoms is 100.

[Test Example 9]

<Measurement of Side Reaction in Anode>

The anode side of the carbon paper having an anode obtained by each of Test Examples 3 to 8 was pressure-bonded to the pellets of a solid electrolyte according to Test Example 2 to fabricate samples. Each sample was placed in an individual tube, and under the condition of 100°C, a mixed gas (80 volume% of hydrogen, 4 volume% of oxygen, and 16 volume% of nitrogen) was fed at a flow rate of 30 ml per minute (in terms of standard state) from one port of the tube, and was discharged from the other port. Then, the discharged gas was analyzed by a gas chromatograph, the concentration z (%) of oxygen at the discharge port was measured, and the oxygen consumption rate y (%) was determined by the following formula (1).

$$y = ((4 - z)/4) \times 100 \qquad (1)$$

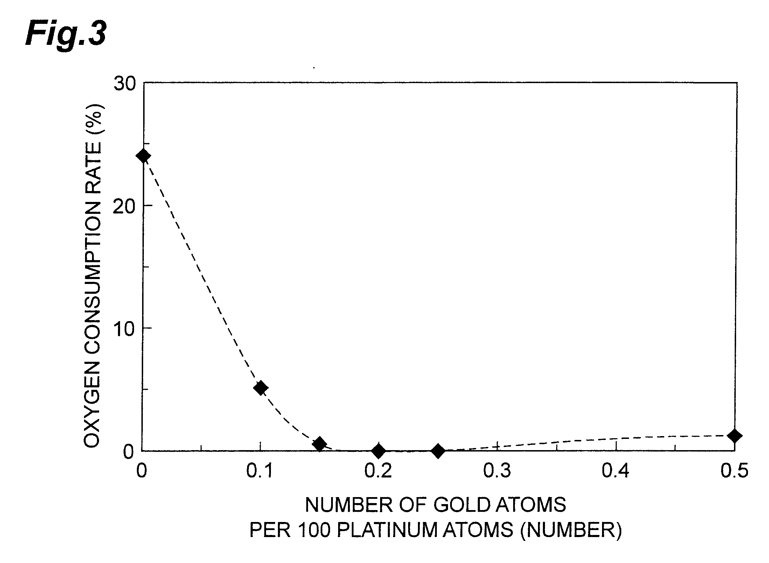

The results of y determined as above are shown in Fig. 3. Fig. 3 is a graph showing relationship, in an anode of each sample, of an oxygen consumption rate (%) obtained by the sample relative to the number of gold atoms per 100 platinum atoms. From Fig. 3, it was understood that y was 24% when the number of gold atoms is 0, whereas y was 4% when 0.10, y was 0.5% when 0.15, 0% when 0.20, y was 0% when 0.25, y was 1.5% when 0.50. In particular, it was understood that, in the case of using the electrode in Test Example 6 (the number of gold atoms was approximately 0.2) or Test Example 7 (the number of gold atoms was approximately 0.25) as an anode, the reactivity with oxygen was extremely low and the electrode was particularly suitable for an anode of fuel cells.

[Test Example 10]

<Single-Chamber Solid Electrolyte Fuel Cell>

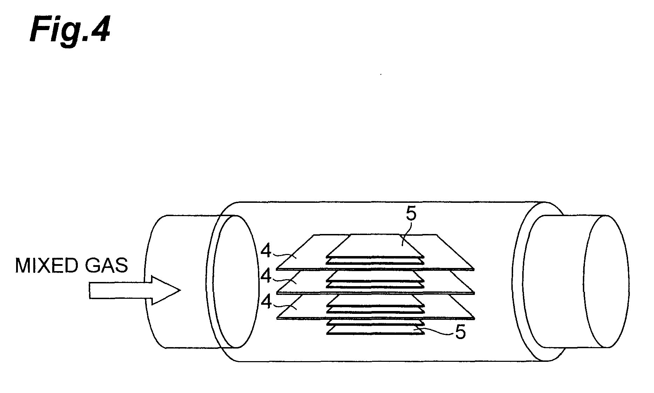

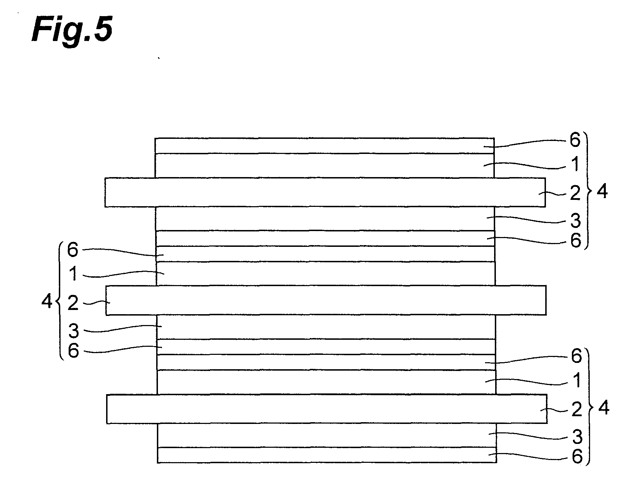

By using the carbon paper having a cathode of Test Example 1, the solid electrolyte of Test Example 2, and the carbon paper having an anode of Test Example 6, a membrane-electrode assembly 4 (refer to Figs. 4 and 5) was fabricated. In this procedure, the cathode side of the carbon paper with a cathode was pressure-bonded so as to make contact with one side of the solid electrolyte and the anode side of the carbon paper having an anode was pressure-bonded so as to make contact with the other side of the solid electrolyte. A single layer of this membrane-electrode assembly was prepared, or two, three, and four layers (stacks) of the assembly were prepared, respectively, by stacking and pressure-bonding, and each of them was placed in an individual tube to obtain single-chamber solid electrolyte fuel cells. Under the condition of 50°C, a mixed gas (80% of hydrogen, 4% of oxygen, and 16% of nitrogen) was fed to each fuel cell from one port at a flow rate of 5 ml per minute (in terms of standard state), and was discharged from the other port. As an example, Fig. 4 schematically shows the configuration of a fuel cell in the case of stacking three layers of the membrane-electrode assembly 4. Fig. 5 shows the laminated condition of the membrane-electrode assembly 4 in Fig. 4.

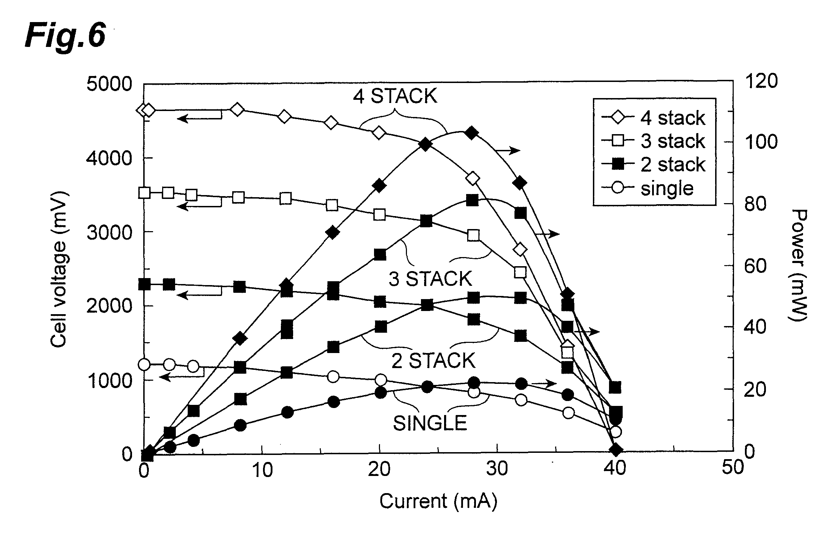

Fig. 6 shows the results obtained by operating each single-chamber solid electrolyte fuel cell under the conditions described above. Fig. 6 is a graph showing power generation characteristics (current-voltage characteristics) obtained in each case of laminating one to four layers of the membrane-electrode assembly 4. It should be noted that, in Fig. 6, the arched curves each having a maximum value attribute to Power on the right vertical axis and the right-downward-sloping characteristics attribute to Cell Voltage on the left vertical axis.

From Fig. 6, it was found that an output exceeding 100 mV can be obtained by stacking four layers. It should be noted that, from the results of Test Example 9, it was confirmed that the same effects as the above can be obtained, even when using the anodes of Test Examples 4, 5, 7, and 8 instead of the anode of Test Example 6.

**Claims**

1. An electrode catalyst composition, comprising gold and platinum,
   wherein the number of gold atoms is exceeding 0 and not more than 3 when the number of platinum atoms is 100.

2. The electrode catalyst composition according to claim 1, wherein the number of gold atoms is not less than 0.15 and not more than 0.25 when the number of platinum atoms is 100.

3. The electrode catalyst composition according to claim 1 or 2, wherein the platinum is modified with the gold.

4. The electrode catalyst composition according to any one of claims 1 to 3, wherein the composition further includes a carbon material.

5. The electrode catalyst composition according to any one of claims 1 to 4, wherein the number of gold atoms modifying the platinum is exceeding 0 and not more than 0.15 when the number of platinum atoms is 100.

6. The electrode catalyst composition according to any one of claims 1 to 5, wherein the gold is obtained by precipitation by a reduction reaction.

7. An electrode, comprising the electrode catalyst composition according to any one of claims 1 to 6.

8. A fuel cell, comprising the electrode according to claim 7.

9. A solid electrolyte fuel cell, comprising the electrode according to claim 7.

10. A single-chamber solid electrolyte fuel cell, comprising the electrode according to claim 7.

11. A single-chamber solid electrolyte fuel cell, comprising the electrode according to claim 7 as an anode.

12. A membrane-electrode assembly, comprising a solid electrolyte membrane; and the electrode according to claim 7 being attached to the solid electrolyte membrane.

13. A method of producing the electrode catalyst composition according to any one of claims 1 to 6, comprising a step of modifying the platinum by gold precipitation by a reduction reaction.

## Fig.1

FUEL GAS

OXIDIZING GAS

# Fig.2

MIXED GAS
(FUEL GAS +
OXIDIZING GAS)

Fig.3

# Fig.4

MIXED GAS

# Fig.5

## Fig.6

EP 2 133 944 A1

## INTERNATIONAL SEARCH REPORT

| International application No. |
| --- |
| PCT/JP2008/055905 |

**A. CLASSIFICATION OF SUBJECT MATTER**
*H01M4/90*(2006.01)i, *B01J23/52*(2006.01)i, *H01M4/88*(2006.01)i, *H01M8/10*(2006.01)i, *H01M8/12*(2006.01)i

According to International Patent Classification (IPC) or to both national classification and IPC

**B. FIELDS SEARCHED**

Minimum documentation searched (classification system followed by classification symbols)
H01M4/90, B01J23/52, H01M4/88, H01M8/10, H01M8/12

Documentation searched other than minimum documentation to the extent that such documents are included in the fields searched
Jitsuyo Shinan Koho          1922-1996   Jitsuyo Shinan Toroku Koho    1996-2008
Kokai Jitsuyo Shinan Koho   1971-2008   Toroku Jitsuyo Shinan Koho    1994-2008

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2006/021740 A1  (JOHNSON MATTHY PUBLIC LTD. CO.), 02 March, 2006 (02.03.06), Claims; examples 1, 2; Figs. 1, 2 & GB 419062 D            & EP 1807200 A & CA 2575806 A          & KR 10-2007-0046112 A & JP 2008-510609 A | 1-13 |
| X | JP 9-161811 A  (Tanaka Kikinzoku Kogyo Kabushiki Kaisha), 20 June, 1997 (20.06.97), Claims (Family: none) | 1-13 |

☒ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 24 June, 2008 (24.06.08) | 08 July, 2008 (08.07.08) |

| Name and mailing address of the ISA/ Japanese Patent Office | Authorized officer |
| --- | --- |
| Facsimile No. | Telephone No. |

Form PCT/ISA/210 (second sheet) (April 2007)

**INTERNATIONAL SEARCH REPORT**

| International application No. |
| --- |
| PCT/JP2008/055905 |

C (Continuation). DOCUMENTS CONSIDERED TO BE RELEVANT

| Category* | Citation of document, with indication, where appropriate, of the relevant passages | Relevant to claim No. |
| --- | --- | --- |
| X | JP 2006-45614 A (Dowa Mining Co., Ltd.), 16 February, 2006 (16.02.06), Claims; Par. Nos. [0003], [0018], [0019] & US 2006/0027042 A1 & EP 1623780 A1 & KR 10-2006-0048970 A & CN 1733396 A | 1-13 |
| X | JP 9-17435 A (Degussa AG.), 17 January, 1997 (17.01.97), Claims; Par. Nos. [0030] to [0036] & US 5767036 A & EP 743092 A1 & DE 19517598 C & DE 59602928 C & AT 183946 E & AT 183946 T & DK 743092 T | 1-13 |
| P,X | JP 2007-273340 A (Cataler Corp.), 18 October, 2007 (18.10.07), Claims & WO 2007/119634 A | 1-13 |
| P,X | JP 2007-273099 A (Toyota Motor Corp.), 18 October, 2007 (18.10.07), Claims & WO 2007/119668 A | 1-13 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10294117 A
- JP 2002280015 A

**Non-patent literature cited in the description**

- **Priestnall ; Kozdeba ; Fish ; Nilson.** *Journal of Power Source,* 2002, vol. 106, 21-30
- **Dyer.** *Nature,* 1990, vol. 343, 547-548
- *Electrochemical and Solid State Letters,* 2006, vol. 9, A105-A109